# EUROPEAN PATENT APPLICATION

(11) **EP 4 296 029 A1**
(43) Date of publication of application: **27.12.2023**
(21) Application number: 22020289.9
(22) Date of filing: 21.06.2022
(51) Int. Cl.: B29C 45/14, B65D 8/00, B65D 5/32

(54) **A package intended for contact with food made of a polyolefin recyclate and a method of its production**

(71) Applicant: MATSIM sp.z o.o., 75-037 Koszalin (PL)
(72) Inventor: GRYGLICKI, Rafal, 75-667 Koszalin (PL); KASPRZAK, Piotr, 75-336 Koszalin (PL)
(74) Representative: Orlinska, Dorota Irena

(57) **Abstract**

The object of the invention is a package intended for contact with food, especially in the form of a container, comprising a polyolefin recyclate, **wherein** it comprises a body (1) made of polyolefin plastic originating, at least partially, from recycling, and from the side contacting food it is provided with an inner coating made of a film intended for contact with food, covering the entire interior of the package body (1), this coating comprising an area or areas (8), in which there are two or three or four permanently joined layers of said film, formed in the places of overlapping connections and/or folds in indicated places of a single-piece or multi-piece film utility of the first type, forming said inner coating made of the film, the package optionally comprising, between the body (1) and the inner coating made of a film intended for contact with food, a layer of reinforcing film, made of a single-piece film utility of the second type (9), with a surface area smaller than the surface area of the interior of the package, and the layer of the reinforcing film being permanently merged with the body of the package and with the inner coating made of the film. The object the invention is also a method for producing such a package.

## Description

The object of the invention is a package intended for contact with food, made of a polyolefin recyclate, and a method for producing this package from a polyolefin recyclate, especially polypropylene and/or polyethylene.

Nowadays, polyolefins, mainly polyethylene (PE) and polypropylene (PP), are the most common group of plastics in the industry, with more than a sixty percent share in the global production of plastics. Polypropylene is a plastic with the lowest density, ranging from 0.900 to 0.910 g/cm³. Polyethylene comes in varieties with various densities: PE-LD, polyethylene with low density, lower than 0.940 g/cm³, and PE-HD, polyethylene with high density, higher than 0.940 g/cm³.

The increasing implementation of waste sorting, and the appearance of separated polyolefin waste result in the search for good, reliable, appealing and proven methods of their processing and utilisation. Secondarily granulated materials produced from polyethylene and polypropylene waste generally do not have as good physicochemical properties as primary plastics. However, they are perfectly suited for manufacturing products with lower quality requirements. Recyclates are usually characterised by lower viscosity and strength, being a mixture of plastics with various densities and varying characteristics. However, differing properties do not constitute an obstacle for their reuse. High quality and carefully selected waste can be adjusted to proper parameters. Recyclates can be used in branches of the industry which set lower requirements compared to products made of the primary raw material.

Recyclate can originate both from post-production and post-consumer waste. In the case of the former, it is possible to trace the material from which the recyclate was made, and ensure its purity, understood as the lack of inclusions of a different type of material. In the case of post-consumer recyclate, it is made from waste, which had already been introduced to the market, and was received from it in the form of waste. In this situation, it is impossible to ensure pureness of such material. Moreover, each batch of such material will be different from the previous one.

Materials, which can be used for contact with food have a strictly specified composition (the absence of heavy metals and other harmful components), and they exhibit low migration of their components to the food being stored. Post-consumer recyclate (PCR) does not fulfil these requirements, and thus it cannot be used as a material for direct contact with food. When proper care is taken, post-production recyclate can be used as a material for direct contact with food.

The invention relates to polyolefin packages made of recyclate, the packages being intended for contact with food.

There are known methods of producing packages made of recyclates, intended for contact with food, formed by the injection method.

One of such methods is co-injection, which involves simultaneous injection of two materials into an injection mould, an original (primary) one, new, and a second one, originating from recycling. Proper shaping of the mould injection system, and a proper, two-component injection moulding machine, enable such a shape of the stream of plastic, in which only the original material flows on one side of the stream, with the recyclate on the other one. In such a method, the cost of the injection mould and the cost of the injection moulding machine are very high; inspection of the package being produced is hindered, especially in the case when the colour of the original plastic and the colour of the recyclate are similar, e.g. when both materials are colourless. It is also difficult to ensure proper thickness of the layer of the original plastic, since, especially near curves in the package, where the stream of plastic changes its flowing direction, uncontrolled mixing of the streams of plastic can take place. It is also necessary to ensure proper thickness of the moulding, usually two times thicker than in the case of the same package made only of the primary material. It is also an inconvenience that the ratio of the original plastic to the recyclate is limited, and it does not exceed 50%.

Another method is overmoulding, which involves a cascade injection of plastic into the mould. Initially, one material is injected, filling the space of the mould, and subsequently adequate elements of the injection mould are moved away from each other in order to create a second space, and a second material is injected. There is also a possibility that, after the first injection, the moulding is released and inserted into a second chamber, suitably larger, so as to enable the injection of the second plastic. Also in this case, the cost of the mould and the injection moulding machine is very high; the kinematics of the injection mould is very complicated, and the production cycle is at least two times longer than for standard production. In here, the inspection of the mouldings is also hindered, especially if both components have the same colour. The thickness of the primary plastic layer, resulting from the limitations of the injection technology, amounts to a minimum of 0.3 mm, and much more often 0.4 mm. It is also strongly correlated with the size of the package. The larger the package and the longer the flow path for plastic, the thicker the layer of primary plastic has to be.

From the international patent application WO2020161361A1 there is a known container for storing food, with a layer comprising a functional barrier material, and an injection moulded layer made of plastic comprising at least 20% of recycled material. The disclosed method comprises supplying a first batch of plastic comprising at least 20% of material made of plastic originating from recycling, injection moulding an outer container from this batch of plastic, supplying a film comprising a layer with a functional barrier material, and thermoforming the film on the inner side of the outer container. Thermoforming can comprise applying adhesives onto the inner layer with the functional barrier material. Optionally, it is possible to separately form the inner part of the container with the functional barrier material, and place it inside a recyclate container. The production of the container comprises a separate step of injection moulding the outer part of the recyclate container as a semi-finished product, and a separate step of creating the inner layer of the container, using a different technology - thermoforming, optionally putting together two parts of the container using an adhesive.

From the international patent application WO2020254677A1 there is a known container for foodstuffs, injection moulded, comprising an inner functional barrier layer, a first injection moulded layer made of food grade plastic for combining with the inner functional barrier layer, and a second layer, injection moulded in a separate step. The inner functional barrier layer and the first injection moulded part together provide a sealing inner surface of the injection moulded container. The second layer of the container is injection moulded in the second step, and it is placed outside the inner functional barrier layer combined with the first layer, and it comprises plastic originating from recycling. The method of producing the container comprises separate production of two parts of the container in two injection moulds. In the first step, the first part of the container is injection moulded by injecting plastic with food grade quality into an injection mould, in which an inner film with food grade quality is arranged. The injection moulded first part of the container along with the film form a functional barrier layer. In the second step, taking place at a second station, the second part of the container made of plastic which can originate from recycling is added (injection moulded) to the first part of the container. The presented method consists of several steps; it is complicated, expensive, and it requires the use of two injection moulds, and the recyclate is only used to form the outer part of the container, meaning its percentage in the end product is relatively low.

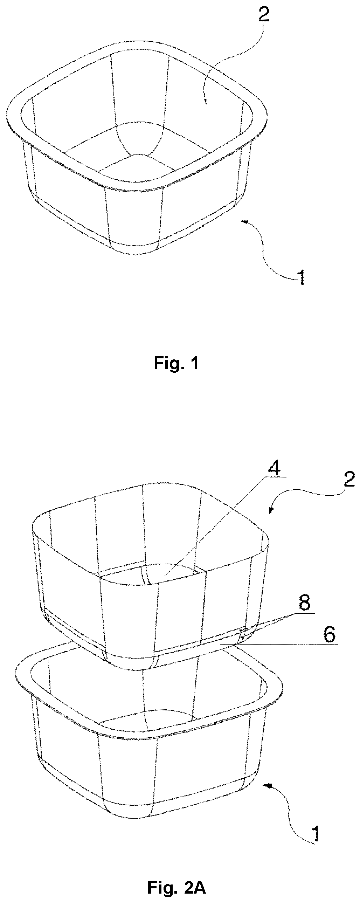

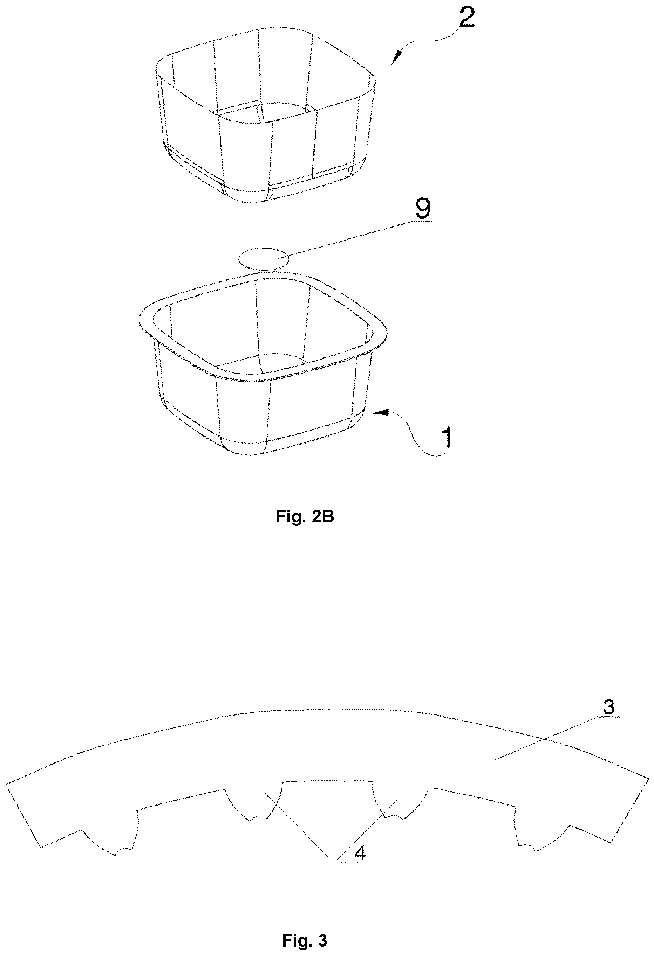

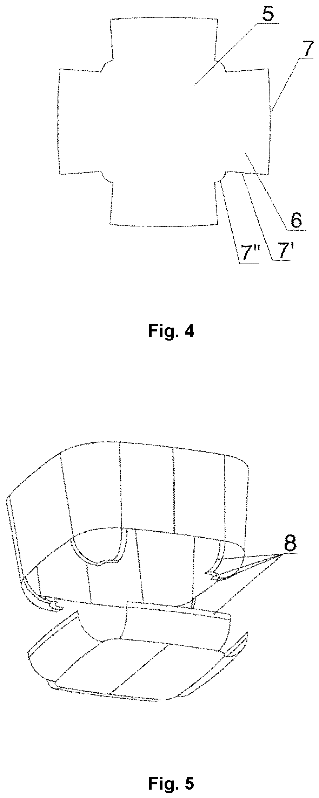

The object the invention is generally presented in the drawings, wherein fig. 1 presents in a perspective view an example of a package made of a polyolefin recyclate by way of injection moulding, fig. 2A generally presents the construction of the container in a first embodiment, consisting of a body and an inner part - a coating lining the body made of recyclate, this inner coating being made of a flat film utility of the first type, fig. 2B generally presents the construction of the container in a second embodiment, in which it consists of a body and an inner coating, lining the body made of recyclate, and between the body and the inner coating there is a film utility of the second type, constituting a layer of a reinforcing film, fig. 3 presents the lateral part of the film utility of the first type with the properties of a functional barrier, fig. 4 presents the bottom part (bottom) of the film utility of the first type with the properties of a functional barrier, and fig. 5 presents two parts of the utility of fig. 3 and fig. 4 in an arrangement which is provided on the core of the injection mould while implementing the method according to the invention.

To sum up, the present invention relates to a package and a modified and improved method for producing the package, which guarantees the possibility of safe use of a recyclate, especially comprising polyethylene and/or polypropylene. For producing packages, the method according to the invention uses polyolefins, which can comprise recyclate in an amount from 1% by weight to 100% by weight, e.g. they can comprise at least 5%, 10%, 20%, 50% or even 80% of polyolefins originating from recycling.

The method according to the invention comprises several generally known steps used in the injection moulding technology. The technology requires providing a typical workstation with a standard injection moulding machine, and an injection mould comprising a core and a die with a fixed shape, which ensure obtaining the intended package/container. The injection moulding step itself is known.

The method according to the invention requires introducing a new step of preparing an inner coating of the container, with the properties of a functional barrier, preferably made of a film or a laminate, in a flat form, i.e. in the form of a sheet, a tape, a coil, a roll, from which the flat film utility of the first type is cut out. It can be a single-piece or a multi-piece utility, comprising between 2 and 10 pieces, or between 2 and 8 pieces, or especially between 2 and 6 pieces, e.g. two-piece, three-piece or four-piece utilities are supplied.

The film of the functional barrier in the form of a cut out film utility of the first type is introduced into the injection mould so as to precisely surround the mould core. Each part of the film utility of the first type is cut so as to cover a appriopriate surface area of the injection mould core. In order to ensure the lack of free spaces between the individual arranged parts of the film, they are applied onto each other with an overlap. Multi-piece film utilities of the first type require the arrangement of their individual parts in a specified order, e.g. the mould core has the utility of the sidewalls wound onto it first, followed by the utility of the bottom, or vice versa. The arrangement of the film utility or a part thereof is performed on the core so as to prevent the joining of edges and the abutment of these edges face-to-face only, which could cause unpreferable penetration of the recyclate material between these edges. This is why all the places of joining the neighbouring edges of the utility, or parts of the utility forming the inner coating plane in the package, are made from the surplus material of the film with the properties of a functional barrier, i.e. the film utility of the first type comprises surpluses.

The cutting of the film utility of the first type is performed in a way enabling adjustment of the shape of this utility to cover the entire interior of the container, and at the same time preventing the film utility material from protruding beyond the interior of the container - there is no need to trim/cut any unnecessary fragments of the film utilities which could remain in the container after performing the injection of the recyclate.

Fig. 3 and fig. 4 present a sample two-piece film utility of the first type, with the properties of a functional barrier, lining the package body from the inner side, intended for contact with food. The film utility of the first type constitutes a semi-finished product for producing the inner part of the container **2,** merged with the container body **1** by way of injection moulding, the utility of the first type consisting of a sidewall portion **3** comprising first type protrusions **4,** and a bottom portion **5** comprising second type protrusions **6.** The bottom portion **5** comprises a second type protrusion face edge **7,** a second type protrusion side edge **7',** and an intermediate edge **7"** located between the neighbouring second type protrusions **6.** The overlapping arrangement of the individual parts of the film utility of the first type means that, for example, the aforementioned edges **7, 7', 7"** of the bottom portion **5** are arranged on the core of the injection mould with partial overlapping with the neighbouring edges of the sidewall portion **3,** and with the edges of the first type protrusions **4** comprised therein. This results in the creation of overlap parts **8,** in which the layers of the abutting neighbouring edges of the utility of the first type or a part thereof are arranged on top of each other, which results in the creation of a double-layer fragment of the inner part of the container. The arrangement of the film utility of the first type on the core of the injection mould can take place, for example, with the participation of forces maintaining the proper position of the utility, e.g. electrostatic forces or negative pressure.

A different design of the package according to the invention is also possible, involving the addition of a film utility of the second type **9,** which is placed between the package body and the inner coating made of the film utility of the first type. The utility of the second type is a single piece, and it is smaller than the utility of the first type. For example, the utility of the second type can have a surface area of less than 50%, preferably less than 30% or less than 20% of the surface area of the container interior. The utility of the second type can have a round, oval, square or rectangular shape, or it can have the shape of the container body bottom, or a surface area smaller than the surface area of the container body bottom. The utility of the second type is only meant to reinforce the area of the package where the injection of polyolefin material from recycling is performed. The utility of the first type is larger, and it is intended to separate foodstuffs from the recyclate. The utility of the second type can be made from the same raw material as the utility of the first type, but it can also be made from a raw material of a different type, e.g. made of a film not intended for contact with food. Utilities of the second type can be made of single- or multi-layered films, or of laminates. They can be made of polypropylene (PP) or polyethylene (PE).

Fig. 5 presents the procedure of arranging a part of the film utility of the first type on the mould core. The shown spatial form has been provided to the individual parts of the utility of the first type on the mould core (the core and the die of the injection mould are not shown; only the film utility is). Also shown are the fragments of the edges of the utility of the first type, cut out with a surplus, in order to enable the creation of 'overlapping' joints between the individual parts of the utility.

It is possible to design the inner coating of the container in the form of a single-piece film utility of the first type. It then has appriopriate notches for overlapping the edges one on top of the other, or it has indicated lines of bends or curves, in order to enable folding or bending the utility material in a planned manner, and surrounding the core of the injection mould while forming a shaped mould of the container interior. In the case when, instead of notches/cut-outs, the utility or a part of the utility of the first type has indicated lines of bends or curves, then they can have any form, e.g. in the case of a package having an approximately rectangular package bottom and four walls, the film utility has four planned bend lines corresponding to the four corners joining the walls of the container.

In the first embodiment of the invention, after fixed positioning of the film utility of the first type or its individual parts, closing of the injection mould takes place on the core of the injection mould. This is followed by injecting the recycled polyolefin material to the closed chamber of the injection mould in order to form a body, which during this process is simulteneously combined and merged with the film utility of the first type, meaning the inner layer of the container, constituting a functional barrier. The combination of both layers of the container - outer and inner, takes place inside the injection mould in a single step along with forming the recyclate body, by the action of a high injection pressure and temperature. The injection step according to the invention is to be understood as any procedure, i.e. single-step or two- or multi-step injection, as well as, for example, cascade or serial injection. At the end of the process, the removal of the finished container from the injection mould takes place by opening the injection chamber.

In the second embodiment of the invention, after fixed positioning of the film utility of the first type or its individual parts on the core of the injection mould, the film utility of the second type, which constitutes a layer of reinforcing film, is applied onto it, preferably in the area of injection of plastic into the mould (in the area of the occurrence of the heaviest mechanical and thermal loads). The film utility of the second type is applied along with its attachment by means of electrostatic forces, or by heating and/or by pressing forces, as well as with different methods. It is also possible, still before placing the utilities on the mould core, to seat, combine and merge the film utility of the second type on the film utility of the first type, or on a appropriate part of the utility of the second type, preferably a part located in the bottom area of the container. Closing of the injection mould takes place in the following step. This is followed by injecting the recycled polyolefin material to the closed chamber of the injection mould in order to form a body, which during this process is simultaneously combined and merged with the film utility of the first type, with the utility of the second type seated thereon. The combination of both layers of the container - outer (the body) and inner, along with the area where there are three layers of the container comprising the utility of the second type, takes place inside the injection mould in a single step along with forming the recyclate body, by the action of a high injection pressure and temperature. The injection step according to the invention is to be understood as any procedure, i.e. single-step or two- or multi-step injection, as well as, for example, cascade or serial injection. At the end of the process, the removal of the finished container from the injection mould takes place by opening the injection chamber.

The resulting package substantially comprises two materials: a body material made from polyolefin plastic originating, at least partially, from recycling, and an inner layer of the functional barrier with known and constant thickness in the entire space of the package. However, overlaps resulting from joining the edges of the utility of the first type are an exception, where the thickness of the functional barrier is two times higher when the neighbouring edges of the film utility are applied onto each other, or three times higher when the surplus parts of the utility are folded in indicated places. These overlaps constitute a negligible percentage of the package surface area. The intended thickness of the package moulding is maintained. The coating made of the film utility of the first type, with the properties of a functional barrier, ensures sufficient slippage for the injected material, and therefore it is not necessary to thicken the moulding in order to inject the film.

In another embodiment of the invention, the package comprises two or three materials, i.e. a body material made of polyolefin plastic originating, at least partially, from recycling, and an inner layer of the functional barrier made of the utility of the first type reinforced in the intended limited area by an additional layer of the film utility of the second type. If the utility of the second type is made of the same material as the film utility of the first type, the package comprises an area consisting of a double layer of the same film (the package contains two raw materials only), and if the utility of the second type is made of a different material from that of the film utility of the first type, the package comprises an area consisting of two layers of mutually different films (the package contains three raw materials).

The ratio of primary plastic to recyclate is very beneficial. For sample thickness of the moulding amounting to 0.6 mm, the most common in food packages, the thickness of the inner coating is 0.06 mm - which constitutes 10% of the package thickness. Therefore, it can be assumed that this ratio can be 90/10 by weight and more for thicker packages. The method according to the invention is extended compared to the traditional method only by the time necessary for coating the injection mould core by the film utility of the first type, and optional attachment of the film utility of the second type. It is comparable to the production cycle of packages in the IML technology. Using such an analogy, it will be longer than the standard cycle by approx. 1.5 s.

The coating with the properties of a functional barrier used in the method can have the form of a film or a laminate. Therefore, for the needs of the present invention, the terms 'film utility', 'film' or 'inner coating' are to be understood as a single-layer film, a multi-layer film or a laminate. In the case of multi-layer films or laminates, for example the first layer (from the side of food) can be antibacterial, the second layer can comprise a luminescent marker, the third layer can constitute a barrier for water vapour and carbon dioxide, and the fourth layer can be a barrier constituting the functional barrier. Film utilities of the first type used to form the coating of the functional barrier are made from a material with thickness between 9 and 60 micrometres, or between 9 and 80 micrometres, or between 9 and 100 or 120 micrometres, or more.

The coating with the properties of a functional barrier is preferably made of polyolefins, and it fulfils the requirements indicated in Commission Regulation (EC) No. 282/2008 of 27 March 2008 on recycled plastic materials and articles intended to come into contact with foods and amending Regulation (EC) No. 2023/2006, for films constituting a functional barrier, separating the contents of the package (food, foodstuffs) from recyclate.

When producing the film utility of the first type, the use of a pure layer of a polyolefin plastic, e.g. polypropylene (PP) or polyethylene (PE), on one or both sides of the layer of plastic originating from recycling, is preferable due to maintaining the homogeneity of the resulting package. A person skilled in the art will be able to verify whether a potential material under consideration is proper for use as a functional barrier for a given foodstuff. There are also other known coatings with the properties of a functional barrier. One of the typical functional barrier materials is ethylene vinyl alcohol (EVOH). Another material can be polyester or polyethylene terephthalate (PET). Another example can be a film with an aluminium barrier layer. It can also be a flexible film covered with aluminium oxide (AIOx). Other proper films with proper coatings or layers, or without them, are also known to a person skilled in the art.

In order to efficiently inspect the tight connections of the edges of the film utility (parts of the film utility) of the first type, with the properties of a functional barrier, this coating has been supplemented with or coated with additives with the nature of markers for visual inspection, for example colourings or luminescent chemical markers, whose presence after activation is detected visually in UV/VIS or different light. The film material can also be multi-layered, and then at least one of the layers comprises a luminescent chemical marker or a colouring. Markers in the form of colourings ensure quality control of the tight connection of the edges of the film utility of the first type via ordinary visual, optical assessment, wherein for the performance of such control, the colour of the inner coating made of the film utility must be contrastingly different from the colour of the package body, meaning that a contrastingly different colour of the film utility should be provided in relation to the container body made of recyclate. For example, this can be achieved by adding a colouring only to the film material with the properties of a functional barrier, or by adding a colouring only to the recyclate, or adding a colouring both to the film and to the recyclate. The contrast between the colours of the two layers of the container (the recyclate body and the inner coating) can be achieved by the use of different colours or shades of colours, or brightness or a different method, enabling interpretation of the difference by visual inspection systems.

Therefore, optionally, marker(s) present in films with the properties of a functional barrier is/are different from the marker/markers present in the polyolefin plastic either by colour, in the case of using colourings, or by luminescent activity observed for a different wavelength, in the case of using luminescent markers. In the case of using colourings as marker/markers for visual inspection, they have colours providing contrast between the colour of the film with the properties of a functional barrier and the colour of the polyolefin plastic.

In the case of using chemical luminescent markers, it is also possible to use them either only in the material of the film with the properties of a functional barrier, or only in the recyclate, or by adding such a marker both to the film and to the recyclate. Chemical markers with photoluminescent properties are activated with light with a proper wavelength, e.g. visible, UV, IR, NIR, X-rays, etc., and subsequently, their secondary emission is observed. For example, for markers activated by UV-A light (310 nm - 380 nm), secondary emission can be observed in the visible wavelength range (approx. 400 nm to 700 nm), i.e. in the blue, green, yellow, orange and red range. Markers of this type can also be selected from a group of phosphorescent and fluorescent compounds. Luminescent chemical markers can also be activated by ultrasounds or elevated temperature.

Sample luminescent chemical markers are described, e.g. in the publication of Jörg Woidasky et al. "Inorganic fluorescent marker materials for identification of post-consumer plastic packaging", Resources, Conservation & Recycling 161 (2020) 104976. Such markers include the compounds of rare earth elements (Tb, Y, Ce, Nd, Gd, Dy, Er, Yb) or complexes based on lanthanides or zinc. The abovementioned applications may also use zinc oxide or more complex compounds based thereon, especially when they have the form of nanoparticles. There are also known luminescent properties of additives based on graphene.

In the simplest embodiment, when the material of film utilities with the properties of a functional barrier (utilities of the first type) comprises the abovementioned chemical luminescent marker, then the polyolefin recyclate from which the package body is made does not comprise luminescent markers; it is devoid of them. In this way, the contrast, which is required by marker detection systems in the package inspection step is provided. Such an inspection system enables independence from the colour of the inner coating in the package, and the colour of the recyclate. At the same time, the visual inspection system is fully automated.

In another embodiment of the invention, it is the polyolefin recyclate, and thus the resulting package body (outer layer of the package) that comprises the chemical luminescent marker. Such a solution also provides optical contrast and enables visual assessment of defects in the inner coating of the package. It is also possible to use said markers both in the material of the film utilities of the first type, as well as in the recyclate. In such a situation, it is necessary to provide diverse secondary emission of markers detectable with different wavelengths.

It is also possible to visually inspect the package based on other physical phenomena, which allow for identifying the discontinuity of the inner layer of the coating made of the film intended for contact with food. For example, it is possible to modify the chemical structure of films intended for contact with food, so that this film reacts to specified conditions, e.g. heat, radiation, etc., and visual inspection is possible with the use of means for optical detection of specified physical or chemical and physical phenomena.

The outer layer of the package (body) is made of recyclate, wherein the polyolefin plastic used in the method according to the invention can comprise at least 50% of recyclate, preferably 80% of recyclate or 90% of recyclate, and especially comprise only recyclate, meaning it does not comprise an admixture of new, primary plastic. The thickness of the outer layer of the container, i.e. the container body, can range from 0.3 to 2.0 mm or from 0.3 to 4.0 mm or more.

The method according to the invention relates to a package whose inner part has a shape enabling the creation of an inner cut-out - the film utility of the first type, being a reflection of this inner surface of the container. The interior must provide the possibility to develop the surface as a flat form - the utility.

In practice, they are packages having a bottom part, a bottom, and sidewalls surrounding the bottom. It may be, e.g. a bottom with a shape, which is approximately round, oval, elliptical, rectangular, with the shape of a polygon, etc. The sidewalls of the container can be higher than the diagonal of the bottom or lower than the diameter of the bottom. The method according to the invention is especially used to produce a container open from the top side, comprising a bottom with sidewalls surrounding it, and optionally an upper folded edge, which enables closing the container, e.g. with a flat lid abutting the folded edge. A container of this type is shown in an embodiment in fig. 1.

The method according to the invention relates to a step of producing a double-layered container, comprising an outer layer - a recyclate body - and an inner layer - a coating constituting a functional barrier; however, for a person skilled in the art it will be obvious that it is possible to develop more complex technological processes involving the addition of subsequent known steps, e.g. the addition of subsequent layers in the containers, e.g. also outer barrier coatings and/or IML-type labels.

In the experimental tests, a two-piece film utility (of the first type) was made from a film with the properties of a functional barrier, i.e. pure primary polyethylene intended for contact with food, 0.03 mm in thickness, with an addition of a MAXITHEN^{®} HP 77210/04 OB luminescent chemical marker in an amount recommended by the producer, as shown in fig. 3 and fig. 4; subsequently, two parts of this utility were applied with an overlap onto the core of an injection mould using negative pressure provided on the surface of this mould. All the edges of the utility were put over each other using the surplus of the film material. The injection mould was closed (a Demag ElExis 1500 injection moulding machine was used), and injection of white polypropylene originating entirely from recycling was performed. Upon opening the mould, the container was removed.

In another test, a single-piece utility of the first type intended for a low container with a square bottom (approximately) and folding on four corners, was made from a film with the properties of a functional barrier in the form of, i.e. made from a laminate of three films: PE, EVOH and PE, with total thickness of 0.08 mm, with an addition of a MAXITHEN^{®} HP 77210/04 OB luminescent chemical marker in an amount recommended by the producer; subsequently, said utility was applied onto the core of an injection mould using negative pressure provided on the surface of this mould. The injection mould was closed (a Demag ElExis 1500 injection moulding machine was used), and injection of white plastic comprising 80% by weight of a mixture of primary PP and PP from recycling was performed. Upon opening the mould, the container was removed.

Visual inspection was performed for the abovementioned products, resulting in confirmation of proper, uniform coating of the container with an inner coating with the properties of a functional barrier.

In another test, a two-piece utility of the first type was made from a film with the properties of a functional barrier, i.e. pure primary polyethylene intended for contact with food, 0.03 mm in thickness, with an addition of a white colouring, in an amount recommended by the producer, as shown in fig. 3 and fig. 4; subsequently, two parts of this utility were applied with an overlap onto the core of an injection mould using negative pressure provided on the surface of this mould. All the edges of the utility of the first type were put over each other using the surplus of the film material. The injection mould was closed (a Demag ElExis 1500 injection moulding machine was used), and injection of brown polyethylene originating entirely from recycling was performed. Upon opening the mould, the container was removed. Visual inspection was performed using a device comprising a camera and dedicated software analysing the homogeneity of the colour of the inner surface of the package.

In another test, a package according to the second embodiment of the invention was made with an addition of a layer of a reinforcing film made from a single-piece film utility of the second type. A two-piece utility of the first type was prepared using a film with the properties of a functional barrier, i.e. pure primary polyethylene intended for contact with food, 0.03 mm in thickness, with an addition of a white colouring, in an amount recommended by the producer, as shown in fig. 3 and fig. 4, as well as the utility of the second type (shown in fig. 2B) in the shape of a disc with a diameter smaller than the desired bottom of the container, subsequently using the film utility of the second type on a part constituting a portion of the bottom of the film utility of the first type, and these portions were heat-joined with each other; subsequently, both parts of the utility of the first type were arranged with an overlap on the core of an injection mould using negative pressure provided on the surface of this mould. All the edges of the utility were put over each other using the surplus of the film material. The injection mould was closed (a Demag ElExis 1500 injection moulding machine was used), and injection of brown polyethylene originating entirely from recycling was performed. Upon opening the mould, the container was removed. Visual inspection was performed using a device comprising a camera and dedicated software analysing the homogeneity of the colour of the inner surface of the package.

The packages according to the invention made in the abovementioned manner and subjected to quality control by a visual examination were tested in terms of parameters characterising the properties of these packages, i.e. global migration levels were tested for components of the product (from the side protected by the inner coating - the functional barrier), to food or food simulants imitating food, which did not exceed a value of 10 mg per 1 dm² of the surface area of the product being in contact with food or a food simulant. The level of specific migration of components of the product (from the side protected by the inner coating - the functional barrier) to food or food simulants imitating food does not exceed the permitted level included in Annex I to Commission Regulation (EU) No. 10/2011 (https://eur-lex.europa.eu/legal-content/PL/TXT/PDF/?uri=CELEX:32011R0010&from=FR)

At the same time, the level of releasing the following substances from the product (from the side protected by the inner coating - the functional barrier) into food or food simulants imitating food does not exceed the specified limits:
a) barium: 1 mg/kg of food or a food simulant imitating food,
b) cobalt: 0.05 mg/kg of food or a food simulant imitating food,
c) copper: 5 mg/kg of food or a food simulant imitating food,
d) iron: 48 mg/kg of food or a food simulant imitating food,
e) lithium: 0.6 mg/kg of food or a food simulant imitating food,
f) manganese: 0.6 mg/kg of food or a food simulant imitating food,
g) zinc: 25 mg/kg of food or a food simulant imitating food.
Moreover, the sum of primary aromatic amines (except those which are listed in table 1 of annex I to Commission Regulation (EU) No. 10/2011) released from the product (from the side protected by the inner coating - the functional barrier) does not exceed 0.01 mg of substance per 1 kg of food or a food simulant imitating food.

Global migration tests are performed according to the standard: PN-EN 1186-8:2002, Materials and articles intended to come into contact with foodstuffs, Plastics, Part 8: Test methods for overall migration into olive oil by article filling; PN-EN 1186-9:2006, Materials and articles intended to come into contact with foodstuffs, Plastics, Part 9: Test methods for overall migration into aqueous food simulants by article filling.

The level of specific migration is tested according to the standards from the series PN-EN 13130-X:2006, where X ranges from 1 to 13, depending on the type of the tested migrating component (and more precisely on the family of compounds to which a given component belongs). The following standards are also used for support: CEN/TS 13130-Y:2005, where Y ranges from 1 to 28.

## Claims

1. A package intended for contact with food, especially in the form of a container, comprising a polyolefin recyclate, **characterised in that** it comprises a body made of polyolefin plastic originating, at least partially, from recycling, and from the side contacting food it is provided with an inner coating made of a film intended for contact with food, covering the entire interior of the package body, this coating comprising an area or areas on a part of the container surface, in which there are two or three or four permanently joined layers of said film, formed in the places of overlapping connections and/or folds in indicated places of a single-piece or multi-piece, originally flat, film utility of the first type, forming said inner coating made of the film, the package optionally comprising, between the body and the inner coating made of the film intended for contact with food, a layer of reinforcing film, made of a single-piece film utility of the second type, with a surface area smaller than the surface area of the interior of the package, and the layer of the reinforcing film being permanently merged with the body of the package and with the inner coating made of the film, the package comprising a component for visual inspection of the continuity of the inner coating made of the film.

2. The package according to claim 1, **characterised in that** the film intended for contact with food constitutes a film with the properties of a functional barrier.

3. The package according to claim 1 or 2, **characterised in that** the film intended for contact with food and/or the polyolefin plastic originating, at least partially, from recycling comprises/comprise at least one component or marker for visual inspection, selected from a group comprising colourings and chemical luminescent markers.

4. The package according to claim 1 or 2 or 3, **characterised in that** the film with the properties of a functional barrier and/or the polyolefin plastic comprise(s) marker(s) for visual inspection.

5. The package according to any of the claims from 1 to 4, **characterised in that** the layer of reinforcing film has a surface area smaller than 50% of the surface area of the package interior.

6. The package according to any of the claims from 1 to 5, **characterised in that** the plastic originating from recycling comprises no more than 20% by weight, preferably no more than 10% by weight, of primary plastic.

7. A method for producing a package intended for contact with food, especially in the form of a container, comprising a polyolefin recyclate, defined in claims from 1 to 6, comprising an injection moulding step, **characterised in that:**
a) a flat film utility of the first type is provided, made of the film intended for contact with food, shaped so as to cover the entire package interior, wherein said film utility can be a single-piece or a multi-piece, and all places of connection and/or folding of the film utility comprise surpluses of the film from which it is made,
b) optionally, a single-piece film utility of the second type is provided, shaped so as to cover only a part of the package interior, and subsequently, either
c) the film utility of the first type is applied onto the core of the injection mould, so that all places of connecting the edges of the film utility, if any, are arranged with an overlap, and/or the utility is folded in indicated places, so that it covers the entire package interior, and optionally the film utility of the second type is applied onto the film utility of the first type, or,
d) outside the injection mould, the film utility of the second type is applied onto the film utility of the first type, and subsequently the film utility of the first type reinforced in this manner is applied onto the core of the injection mould, so that all places of connecting the edges of the film utility, if any, are arranged with an overlap, and/or the utility is folded in indicated places, so that it covers the entire package interior, upon which,
e) outside the film utility of the first type, or outside the utility of the first type reinforced with the utility of the second type from step c) or step d), polyolefin plastic originating, at least partially, from recycling is injected into the injection mould chamber, and the package comprising an inner surface made from the film utility of the first type is injection moulded, upon which, after producing the container, its inner surface is subjected to visual inspection.

8. The method according to claim 7, **characterised in that** the film intended for contact with food constitutes a film with the properties of a functional barrier.

9. The method according to claim 7 or 8, **characterised in that** the film with the properties of a functional barrier and/or the polyolefin plastic originating, at least partially, from recycling comprises/comprise at least one component for visual inspection selected among markers selected from a group comprising colourings and chemical luminescent markers.

10. **The** method according to claim 7 or 8 or 9, **characterised in that,** when a single-piece film utility is being cut out, then it comprises cut-outs and/or notches following the shape of the package interior and the overlapping of the utility edges connected with an overlap, and/or the film utility comprises places indicated for its folding with an overlap, and when a multi-piece film utility is being cut out, it comprises a bottom portion and sidewall portion or portions.

11. The method according to any of the claims from 7 to 10, **characterised in that** the film with the properties of a functional barrier and/or the polyolefin plastic comprise(s) marker(s) for visual inspection.

12. The method according to any of the claims from 7 to 11, **characterised in that,** when chemicaluminescent markers are used for visual inspection, then the visual inspection is based on the detection of the luminescent activity of this/these marker/markers, and when colourings are used for visual inspection, then the visual inspection is based on visual detection on the heterogeneity of the colour of the inner container surface.

13. The method according to any of the claims from 7 to 12, **characterised in that** plastic originating from recycling comprises no more than 20% by weight, preferably no more than 10% by weight, of primary plastic.
